# EUROPÄISCHE PATENTSCHRIFT

(11) **EP 3 208 174 B1**
(45) Veröffentlichungstag und Bekanntmachung des Hinweises auf die Patenterteilung: **05.01.2022**
(21) Anmeldenummer: 17155335.7
(22) Anmeldetag: 09.02.2017
(51) Int. Cl.: B62B 3/00, B62B 3/02

(54) **TRANSPORTWAGEN**
TRANSPORT TROLLEY
CHARIOT DE TRANSPORT

(30) Priorität: 18.02.2016 DE 102016102900
(43) Veröffentlichungstag der Anmeldung: 23.08.2017
(73) Patentinhaber: Wanzl GmbH & Co. KGaA, 89340 Leipheim (DE)
(72) Erfinder: Paul, Jürgen, 87739 Loppenhausen (DE); Gasche, Thomas, 89340 Leipheim (DE); Brecheisen, Matthias, 86863 Langeneufnach (DE); Schantini, Georg, 86480 Aletshausen (DE); Waigel, Markus, 87769 Oberrieden (DE)

(56) Entgegenhaltungen:
- EP-A1- 2 907 410
- DE-A1- 2 133 139
- DE-A1- 3 211 404
- DE-A1- 4 320 454
- DE-A1-102010 032 962
- DE-C1- 4 440 139
- DE-U1-202009 002 005

## Beschreibung

Die vorliegende Erfindung betrifft einen Transportwagen, insbesondere einen von Hand schiebbaren Service- und Reinigungswagen mit einem Untergestell und mit mehreren am Untergestell montierten Rollen.

Derartige Service- und Reinigungswagen sind bereits aus dem Stand der Technik bekannt und werden auch "Zimmermädchenwagen" oder "Room-Service-Wagen" genannt. Derartige Wagen werden insbesondere im Hotelbereich benutzt für das Housekeeping oder den Roomservice, wobei das Hotelpersonal, das für das Housekeeping, also das Herrichten der Zimmer zuständig ist, sämtliche hierfür benötigten Utensilien in dem Service- und Reinigungswagen mit sich führt.

Diese Wagen weisen üblicherweise einen zentralen Wagenteil auf, in dem Reinigungsmittel, frische Handtücher, Süßigkeiten, Getränke z.B. für die Minibar und dergleichen mit sich geführt werden.

Darüber hinaus ist üblicherweise an einen derartigen Wagen auch ein sog. Satellit oder Satellit-Zusatzwagen angehängt, in den Schmutzwäsche, wie gebrauchte Handtücher oder benutzte Bettwäsche, eingeworfen werden können. Auch ist es möglich, dass in einem derartigen Satellit ein Abfallsack aufgespannt ist, in den Abfälle eingeworfen werden können.

Ein derartiger Service- und Reinigungswagen ist beispielsweise aus der US 8,419,024 B1 bekannt. An den dort bekannten Wagen kann ein Satellit angehängt werden, der im Wesentlichen die Form einer fahrbaren Mülltonne aufweist.

Die EP 1 532 894 B1 offenbart einen rollbaren Werkstattwagen zur Aufbewahrung und Sortierung von Werkzeugen.

Die EP 0 822 771 B1 beschreibt einen fahrbaren Tablettwagen, in den Tabletts eingeschoben werden können. Derartige Wägen sind beispielsweise in Fast-Food-Restaurants im Einsatz.

Die EP 0 959 724 A2 zeigt einen fahrbaren Medikamentenwagen mit einer Vielzahl von Schubfächern.

Das Europäische Geschmacksmuster EU 1085427 offenbart einen Verkaufsständer bestehend aus mehreren Metallsystemprofilen.

Die EP 1 023 857 B1 offenbart ein Gestell für eine Einrichtung zur Darbietung von Ware, das mit Rahmenteilen versehen ist, die als Metallprofile ausgeführt sind.

Weiterhin ist aus der DE 10 2010 032 962 A1 ein Transportcontainer bekannt. Dieser weist vier Rollen auf, die an einem Fahrgestell mit einer Bodenplatte angeordnet sind. Der Container ist mit Wänden und einem Deckel ausgestattet, wobei die Vorderseite des Containers mit zwei Türen versehen ist, die an den Seitenwänden ins Innere des Containers versenkbar sind.

Die bekannten Service- und Reinigungswagen sind im Wesentlichen nach Kundenwunsch gefertigte Einzelanfertigungen, was deren Herstellung vergleichsweise aufwändig macht.

Es ist daher die Aufgabe der vorliegenden Erfindung, einen Service- und Reinigungswagen der eingangs genannten Art in vorteilhafter Weise weiterzubilden, insbesondere dahingehend, dass ein von Hand schiebbarer Service- und Reinigungswagen einfacher aufgebaut und gefertigt werden kann.

Diese Aufgabe wird erfindungsgemäß gelöst durch einen von Hand schiebbaren Service- und Reinigungswagen mit den Merkmalen des Anspruchs 1. Danach ist vorgesehen, dass ein von Hand schiebbarer Service- und Reinigungswagen mit einem Untergestell und mit mehreren am Untergestell montierten Rollen versehen ist, wobei weiter vier Seitenstreben vorgesehen sind, die ein Grundgerüst für einen Aufbau des Service- und Reinigungswagens bilden, und wobei die Seitenstreben aus einem Metallsystemprofil ausgebildet sind.

Die Erfindung basiert auf dem Grundgedanken, im Zusammenhang mit dem Aufbau eines Service- und Reinigungswagens eine größere Standardisierung herbeizuführen, indem standardmäßig verfügbare Halbzeuge, wie Metallsystemprofile eingesetzt werden. Derartige Metallsystemprofile sind beispielsweise als sogenannte ITEM-Profile oder BOSCH-Rexroth-Profile bekannt und können beispielsweise als Stahlprofile oder, noch weiter verbreitet, als Aluminiumprofile ausgeführt sein. Derartige Metallsystemprofile weisen darüber hinaus den Vorteil auf, dass diese bereits im Rahmen ihrer Profilierung Befestigungsschienen oder Bohrmuster aufweisen, in denen bereits vorgefertigte weitere Befestigungselemente eingesetzt werden können. Durch den Einsatz derartiger, standardisierter Metallsystemprofile kann daher der Aufbau für den Service- und Reinigungswagen deutlich vereinfacht werden. Hierdurch kann die Fertigung erleichtert und auch insgesamt können die Kosten für die Herstellung des Wagens deutlich gesenkt werden. Denn aufgrund des Rückgriffs auf standardisierte Metallsystemprofile ist es nicht mehr notwendig, kundenspezifische Sonderanfertigungen tätigen zu müssen.

Bei den Service- und Reinigungswagen kann es sich insbesondere um Zimmermädchenwagen oder sogenannte Room-Service-Wagen für das Housekeeping insbesondere im Hotelbereich handeln.

Des Weiteren kann vorgesehen sein, dass das Metallsystemprofil ein Viertelrundprofil mit einer Viertelrundseite ist und zwei weitere Funktionalseiten mit einer oder mehreren Befestigungsnuten aufweist. Diese Gestaltung des Metallsystemprofils erlaubt es, das Viertelrundprofil mit der Viertelrundseite so anordnen zu können, dass die Viertelrundseite im Wesentlichen die abgerundete Ecke des Aufbaus des Service- und Reinigungswagens bildet und die beiden Funktionalseiten beispielsweise zur Aufnahme der Seitenwände dienen können. Darüber hinaus können in den Befestigungsnuten neben den Seitenwänden auch ein Einlegeboden oder eine oder mehrere Schubladenaufhängungen angeordnet werden.

Alternativ ist denkbar, dass das Metallsystemprofil ein eckiges Profil, insbesondere ein Rechteckprofil oder ein quadratisches Profil, ist und zwei weitere Funktionalseiten mit einer oder mehreren Befestigungsnuten aufweist.

Darüber hinaus kann vorgesehen sein, dass jede Funktionalseite zwei oder mehrere Befestigungsnuten aufweist. Durch das Vorsehen mehrerer Befestigungsnuten wird es möglich, unterschiedliche Nutzungsmöglichkeiten der Befestigung in dem Metallsystemprofil auf beispielsweise derselben Höhe zu ermöglichen. Derartige Nutzungsmöglichkeiten bzw. Befestigungsmöglichkeiten können in einem bloßen Einstecken, einem Verklemmen, einem Verrasten, einem Verschrauben oder einem Einstecken von Befestigungsmitteln oder Bauelementen des Aufbaus des Service- und Reinigungswagens bestehen.

Des Weiteren kann vorgesehen sein, dass die Befestigungsnuten in ihren seitlichen Begrenzungswänden jeweils wenigstens eine Zusatznut aufweisen, die sich gegenüberliegen. Dadurch wird es möglich, in der Befestigungsnut beispielsweise einen Rahmen oder einen Flachstahl einzuschieben, in dem bereits entsprechende Schlitze oder Vorbohrungen vorgesehen sind. In diese Schlitze oder Vorbohrungen kann dann wiederum ein weiteres Element eingehängt werden. Über die Zusatznuten kann darüber hinaus auch eine elegante Befestigungsmöglichkeit für das Einschieben und die Befestigung von Seitenwänden ermöglicht werden.

Das Metallsystemprofil kann im Bereich der Viertelrundseite eine oder mehrere Anschraubaufnahmen aufweisen. Diese Anschraubaufnahmen können beispielsweise Positionierungen für die Abweisrollen sein. Derartige Abweisrollen sind insbesondere im Eckenbereich des Wagens erwünscht, um ein Anschlagen des Metallprofils bei Kollision des Wagens mit Wänden zu vermeiden. Denkbar ist insbesondere, dass in die Anschraubaufnahmen Gewindeformen der Schrauben eingeschraubt werden können. Dies hat den Vorteil, dass kein gesondertes Gewinde in der Anschraubaufnahme vorgesehen sein muss.

Darüber hinaus kann vorgesehen sein, dass das Metallsystemprofil eine zentrale Anschraubbohrung aufweist. Bei dieser zentralen Anschraubbohrung muss nicht zwingend vorgesehen sein, dass hier eine zylindrisch geschlossene Querschnittsprofilierung vorgesehen ist. Es genügt, wenn eine teilweise zylindrische Struktur, die auch einen Längsschlitz aufweisen kann, vorgesehen ist. Auch hier kann es vorgesehen sein, dass in diese zentrale Anschraubbohrung eine Gewindeschraube eingeschraubt werden kann. Des Weiteren kann vorgesehen sein, dass der Service- und Reinigungswagen im Bereich des Untergestells einen Einhängbügel aufweist, an dem ein Satellit-Zusatzwagen anhängbar ist. Bei dem Satellit-Zusatzwagen kann es sich beispielsweise um einen Zusatzanhänger handeln, der ein Metallgestell oder sonstiges Gestell trägt, in dem ein Wäschesack aufhängbar ist. Denkbar ist insbesondere, dass der Satellit-Zusatzwagen auf den Einhängbügel von oben aufgesetzt wird, so dass der Einhängbügel einen Teil des Rahmens des Untergestells des Satellit-Zusatzwagens von unten untergreift und den Satellit-Zusatzwagen hierdurch sicher ziehen kann.

Des Weiteren kann vorgesehen sein, dass oberhalb des Einhängbügels an einer Seitenwand des Service- und Reinigungswagens im Bereich des dem Untergestell abgewandten Endes der Seitenwand wenigstens eine Einrastkralle hervorragt, die im angehängten Zustand des Satellit-Zusatzwagens einen Rahmenbügel des Satellit-Zusatzwagens übergreift. Dadurch wird es möglich, dass der Satellit-Zusatzwagen sowohl durch den Einhängbügel als auch durch die Einrastkralle, die den Rahmenbügel übergreift, sicher gehalten wird und ein Abkippen verhindert wird. Insbesondere durch die Kombination eines Untergreifens mit dem Einhängbügel und eines Übergreifens mit der Einrastkralle wird eine sichere Fixierung des Satellit-Zusatzwagens ermöglicht.

Darüber hinaus ist vorgesehen, dass im montierten Zustand zwischen zwei Metallsystemprofilen ein ausklappbarer Absteller angeordnet ist. Der Absteller weist wenigstens einen in den Metallsystemprofilen befestigungsmittelfrei einklipsbaren Befestigungsrahmen, wenigstens eine gegenüber dem Befestigungsrahmen verschwenkbare Abstellfläche und wenigstens einen Fixierungsbügel auf, mittels dessen im ausgeklappten Zustand der Abstellfläche die Position der Abstellfläche relativ zum Befestigungsrahmen fixiert ist.

Durch eine derartige Konstruktion wird es möglich, einen ausklappbaren Absteller einfach in den Metallsystemprofilen befestigungsmittelfrei, insbesondere ohne Fixierungsschrauben befestigen zu können. Ein derartiger Absteller kann beispielsweise im unteren Bereich des Service- und Reinigungswagens angeordnet werden, insbesondere als Absteller für einen Müllbehälter oder dergleichen. Denkbar ist aber auch, einen derartigen Absteller im oberen Bereich des Service- und Reinigungswagens vorzusehen, um beispielsweise eine weitere Abstellfläche oder Arbeitsfläche zu schaffen. Bei dem Absteller kann es sich um einen Drahtgeflechtabsteller oder um eine Platte handeln, die ausgeklappt werden kann. Des Weiteren kann vorgesehen sein, dass im Aufbau des Service- und Reinigungswagens wenigstens eine Schublade vorgesehen ist, wobei im Inneren der Schublade mehrere gesonderte Ablagefächer und eine Schreibfläche vorgesehen sind, wobei die Schreibfläche gesondert auch im geschlossenen Zustand der Schublade herausziehbar ist. Denkbar ist auch, dass die gesonderten Ablagefächer nicht zwangsläufig durch das Herausziehen der Schublade ausgezogen werden, sondern nur je nach Bedarf. Allerdings ist vorzugsweise vorgesehen, dass die Frontseite der Schublade im geschlossenen Zustand die Ablagefächer überdeckt. Die Schreibfläche und ihre Frontseite können gesondert aus der Schublade herausgezogen werden, wozu die Frontseite der Schublade hierzu eine entsprechende Ausnehmung aufweisen kann bzw. aufweist.

Weitere Einzelheiten und Vorteile der vorliegenden Erfindung sollen nun anhand eines in den Zeichnungen dargestellten Ausführungsbeispiels näher erläutert werden. Es zeigen:
- Fig. 1: eine perspektivische Darstellung eines Ausführungsbeispiels eines Service- und Reinigungswagens, wobei dieses Ausführungsbeispiel nicht durch die beanspruchte Erfindung abgedeckt ist.
- Fig. 2: eine weitere perspektivische Darstellung des Service- und Reinigungswagens gemäß Fig. 1;
- Fig. 3: eine weitere perspektivische Darstellung des Service- und Reinigungswagens gemäß Fig. 1 in einer erfindungsgemäßen Ausgestaltung;
- Fig. 4: eine perspektivische Darstellung des Service- und Reinigungswagens gemäß Fig. 3;
- Fig. 5: eine Draufsicht auf den Querschnitt des Metallsystemprofils für den Service- und Reinigungswagen gemäß Fig. 1;
- Fig. 6: eine perspektivische Detail-Draufsicht auf einen Teil des Metallsystemprofils gemäß Fig. 5;
- Fig. 7: eine weitere perspektivische Detail-Ansicht auf einen Teil des Metallsystemprofils gemäß Fig. 5;
- Fig. 8: eine weitere perspektivische Ansicht des Metallsystemprofils gemäß Fig. 5;
- Fig. 9: eine weitere perspektivische Ansicht des Metallsystemprofils gemäß Fig. 5;
- Fig. 10: eine perspektivische Detail-Ansicht von Einsatzelementen (teilweise nicht vollständig dargestellt) in das Metallsystemprofil gemäß Fig. 5;
- Fig. 11: eine perspektivische Detail-Ansicht auf Einsetzelemente (nur teilweise im Detail dargestellt) für das Metallsystemprofil gemäß Fig. 5;
- Fig. 12: eine perspektivische Detail-Draufsicht auf einen Teil des Grundgerüsts eines Satellit-Zusatzwagens für den Service- und Reinigungswagen gemäß Fig. 1;
- Fig. 13: eine Seitenansicht auf den Satellit-Zusatzwagen für den Service- und Reinigungswagen gemäß Fig. 1;
- Fig. 14: eine perspektivische Detail-Ansicht auf den Service- und Reinigungswagen gemäß Fig. 1 mit einem Satellit-Zusatzwagen;
- Fig. 15: eine weitere perspektivische Detail-Darstellung auf den Service- und Reinigungswagen gemäß Fig. 1 im Ankopplungsvorgang betreffend den Satellit-Zusatzwagen (nur teilweise im Detail dargestellt);
- Fig. 16: eine weitere perspektivische Detail-Darstellung auf den Service- und Reinigungswagen gemäß Fig. 1 im Ankopplungsvorgang betreffend den Satellit-Zusatzwagen (nur teilweise im Detail dargestellt);
- Fig. 17: eine weitere perspektivische Detail-Darstellung auf den Service- und Reinigungswagen gemäß Fig. 1 im Ankopplungsvorgang betreffend den Satellit-Zusatzwagen (nur teilweise im Detail dargestellt);
- Fig. 18: eine weitere perspektivische Detail-Darstellung auf den Service- und Reinigungswagen gemäß Fig. 1 im Ankopplungsvorgang betreffend den Satellit-Zusatzwagen (nur teilweise im Detail dargestellt);
- Fig. 19: eine perspektivische Darstellung auf eine Schublade für den Service- und Reinigungswagen gemäß Fig. 1;
- Fig. 20: eine weitere perspektivische Ansicht der Schublade gemäß Fig. 19;
- Fig. 21: eine weitere perspektivische Ansicht auf die Schublade gemäß Fig. 19;
- Fig. 22: eine perspektivische Detail-Darstellung eines ausklappbaren Abstellers für einen Service- und Reinigungswagen gemäß Ausführungsform nach Fig. 3;
- Fig. 23: eine weitere perspektivische Darstellung des Abstellers gemäß Fig. 22;
- Fig. 24: eine perspektivische Detail-Darstellung für den Absteller gemäß Fig. 22; und
- Fig. 25: eine perspektivische Darstellung auf den einklipsbaren Befestigungsrahmen des Abstellers gemäß Fig. 22.

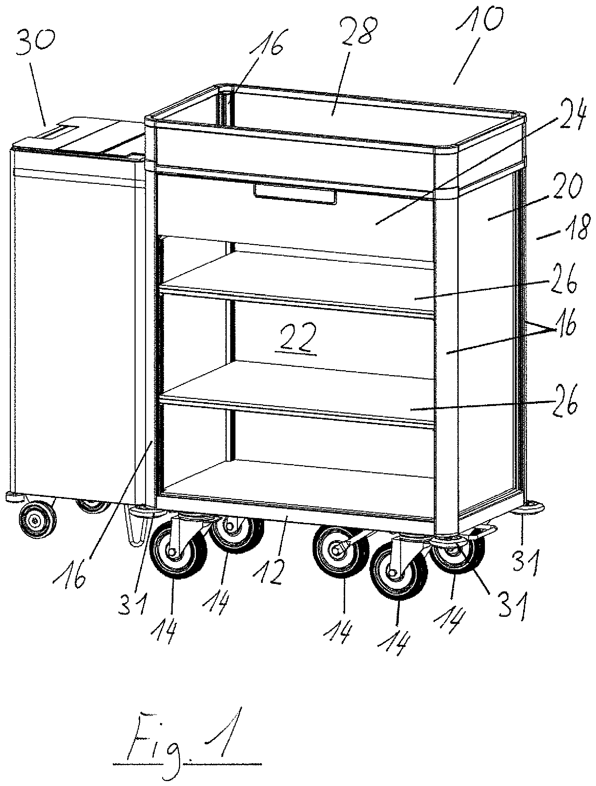

Fig. 1 zeigt in perspektivischer Ansicht ein Ausführungsbeispiel von Hand schiebbaren Service- und Reinigungswagen 10, wobei dieses Ausführungsbeispiel nicht durch die beanspruchte Erfindung abgedeckt ist.

Der Service- und Reinigungswagen 10 weist ein Untergestell 12 auf, an dem mehrere Rollen, hier fünf Rollen 14 vorgesehen sind.

Dabei ist in den vier Ecken des Untergestells 12 jeweils eine Rolle 14 vorgesehen und mittig, bezogen auf das Untergestell 12, eine fünfte Rolle 14, die zu einer besseren Gewichtsverteilung und Fahrbarkeit des Service- und Reinigungswagens 10 dort angeordnet ist.

Auf dem Untergestell 12 sind in den vier Ecken vier Seitenstreben 16 vorgesehen, die sich senkrecht aus dem Untergestell 12 heraus im montierten Zustand nach oben erheben.

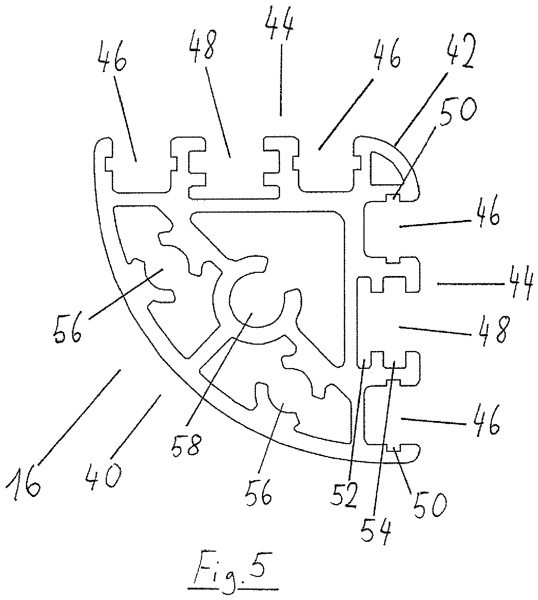

Bei den Seitenstreben 16 handelt es sich um Metallsystemprofile, wie sie nachstehend im Zusammenhang mit den Figuren 5 bis 11 näher erläutert werden.

Die Seitenstreben 16 bilden ein Grundgerüst für den Aufbau 18 des Service- und Reinigungswagens 10 aus.

Der Aufbau 18 ist hier dergestalt, dass durch die Seitenstreben 16 drei Seitenwände 20, 22 gehalten werden, die wiederum im Aufbau 18 einen Innenraum begrenzen, in dem eine Schublade 24 sowie mehrere Regalfächer 26 vorgesehen sind.

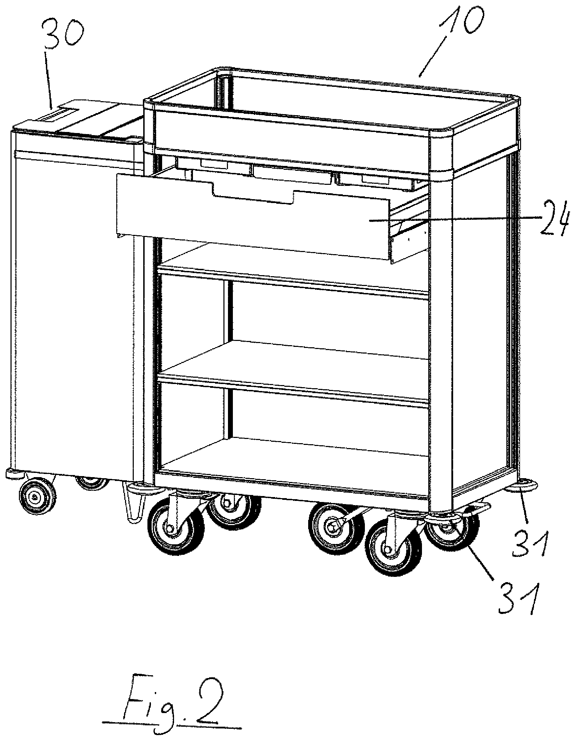

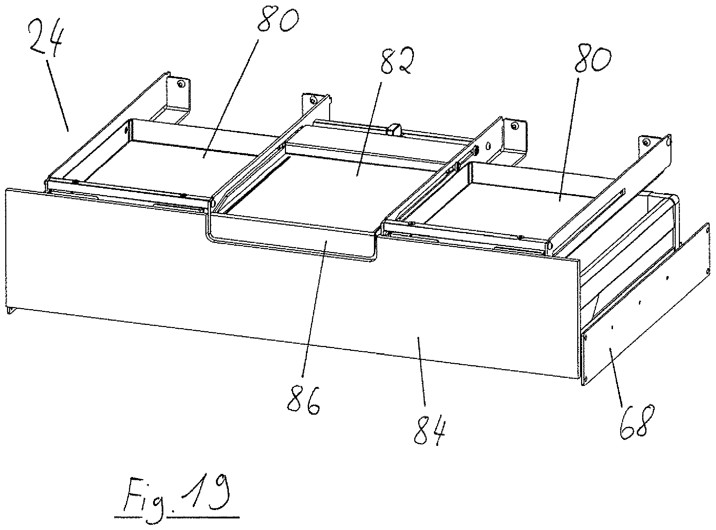

Die Schublade 24 ist im ausgezogenen Zustand in Fig. 2 gezeigt und wird nachstehend noch im Zusammenhang mit den Figuren 19 bis 21 näher erläutert.

Im oberen Bereich des Service- und Reinigungswagens 10 befindet sich eine ringsum umrandete Abstellfläche 28, in die beispielsweise Arbeitsmaterialien und Nachfüllmaterialien eingestellt werden können.

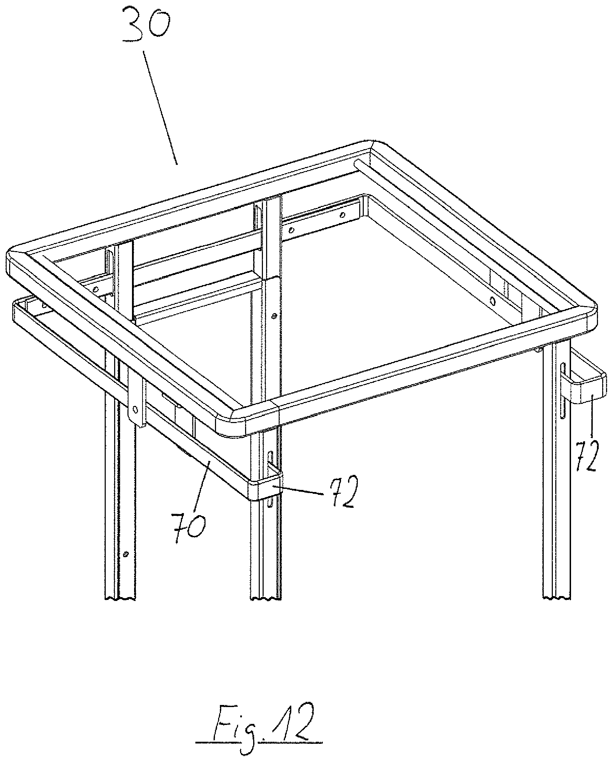

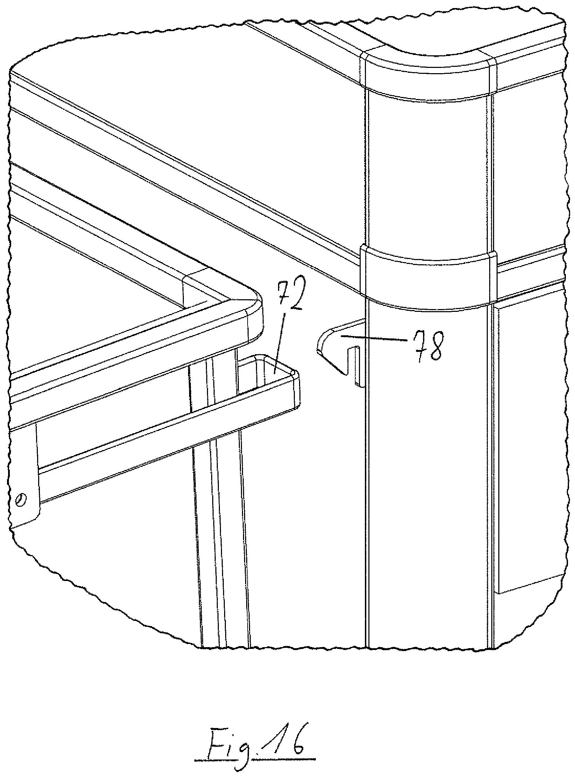

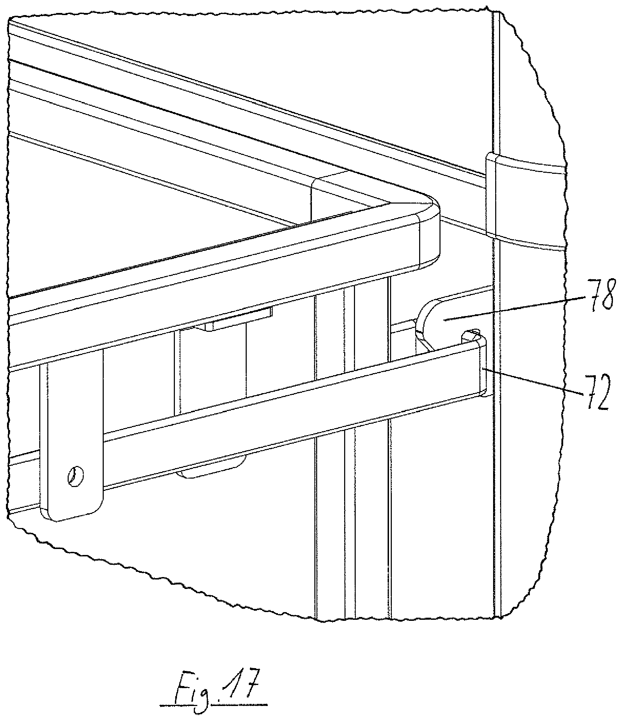

In der dargestellten Ausführungsform des Service- und Reinigungswagens 10 ist ferner ein Satellit-Zusatzwagen 30 ersichtlich, der an den Service- und Reinigungswagen 10 angekoppelt ist. Weitere Einzelheiten des Satellit-Zusatzwagens 30 sind nachstehend in den Figuren 12 bis 18 gezeigt und entsprechend nachstehend auch erläutert.

Wie dies weiter aus den Figuren 1 bis 4 ersichtlich ist, sind unterhalb des im Bereich des Untergestells 12 befindlichen Endes der Seitenstreben 16 in den Seitenstreben 16 Abweisrollen 31 befestigt.

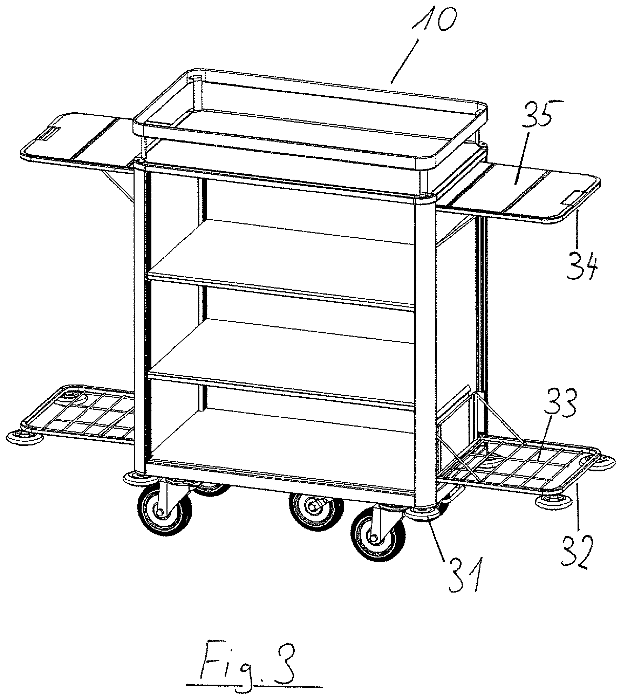

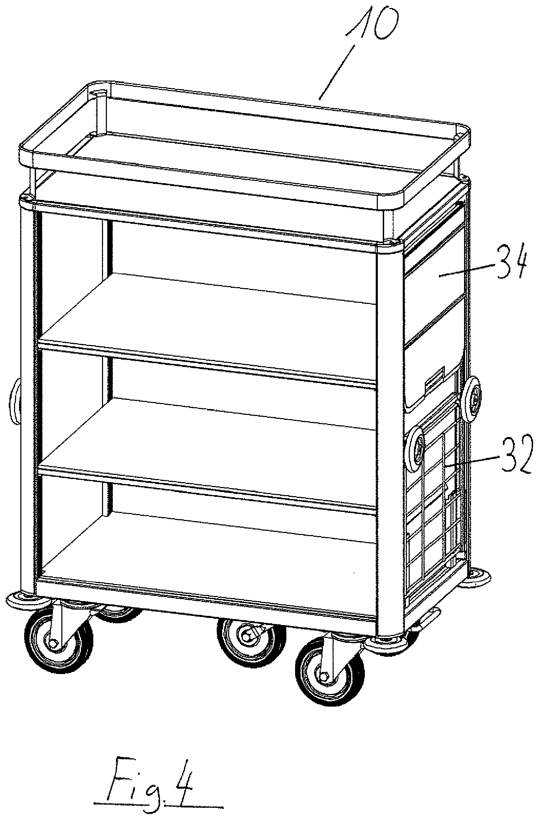

In Fig. 3 und 4 ist eine erfindungsgemäße Ausgestaltung des Service- und Reinigungswagens 10 gezeigt, hier mit ausklappbaren Abstellern 32 und 34.

Der Absteller 32 ist dabei mit einem Gittereinsatz 33 versehen und der Absteller 34 mit einem durchgängigen Boden 35.

Fig. 3 zeigt die Absteller 32 und 34 im ausgeklappten Zustand und Fig. 4 die Absteller 32 und 34 im eingeklappten Zustand.

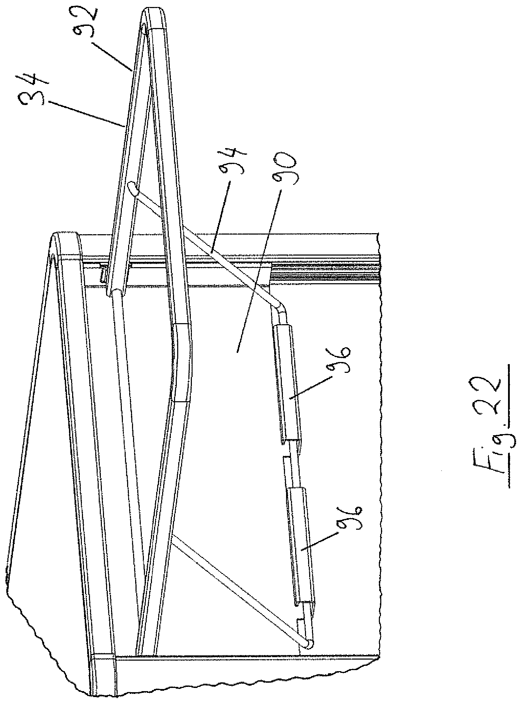

Weitere Einzelheiten im Hinblick auf den Absteller 32 bzw. 34 sind in den Figuren 22 bis 25 gezeigt, wobei hier die Befestigung des Abstellers 34 im Detail erläutert wird, die analog auch für den Absteller 32 gilt.

Fig. 5 zeigt eine Draufsicht auf den Querschnitt des Metallsystemprofils 16.

Wie dies aus Fig. 5 ersichtlich ist, handelt es sich bei dem Metallsystemprofil um ein Viertelrundprofil mit einer Viertelrundseite 40. Darüber hinaus weist das Metallsystemprofil 16 auf der der Viertelrundseite gegenüberliegenden Seite eine Abrundung 42 auf und zwischen der Viertelrundseite 40 und der Abrundung 42 befinden sich im 90°-Winkel zueinander zwei Funktionalseiten 44, die identisch aufgebaut sind. Die Funktionalseiten 44 weisen jeweils drei Befestigungsnuten 46 und 48 auf, wobei die mittlere Befestigungsnut 48 größer ausgebildet ist als die beiden außenliegenden Befestigungsnuten 46.

Jede der Befestigungsnuten 46, 48 weist in ihren seitlichen Begrenzungswänden jeweils wenigstens eine Zusatznut 50, 52 auf, die sich gegenüberliegt. Die Befestigungsnut 48 weist dabei zwei derartige Zusatznutpaare 52, 54 auf.

Im Bereich der Viertelrundseite 40 sind zwei Anschraubaufnahmen 56 vorgesehen.

Diese Anschraubaufnahmen 56 sind durch entsprechende Profilanformungen ausgebildet, die sich längs des Metallsystemprofils der Seitenstrebe 16 erstrecken.

Die Anschraubaufnahmen 56 sind dabei derart ausgebildet, dass beispielsweise eine Gewindeschraube hier eingedreht werden kann.

Nach dem gleichen Prinzip ist auch eine zentrale Anschraubbohrung 58 vorgesehen, in die ebenfalls eine Gewindeschraube eingeschraubt werden kann.

Insbesondere kann vorgesehen sein, dass das Metallsystemprofil für die Seitenstrebe 16 als Aluminiumprofil ausgebildet ist.

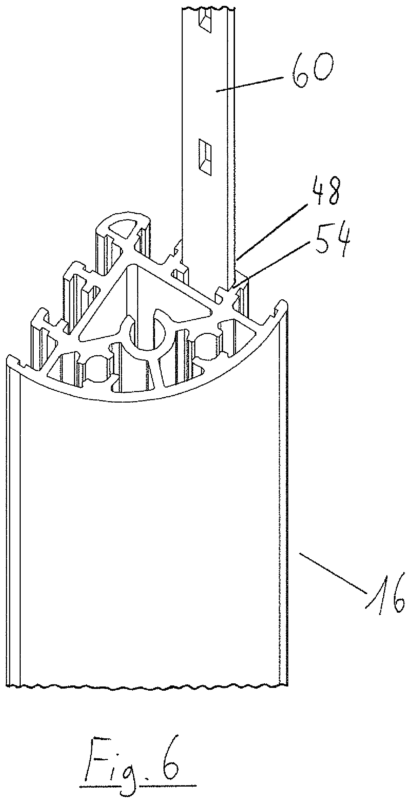

Die Funktion der Zusatznut 50, 52 kann insbesondere darin bestehen, Anbauteile aufzunehmen. Ein derartiges Anbauteil kann beispielsweise ein Flachstahl sein oder einen Flachstahl aufweisen. Ein derartiger Flachstahl kann z.B. als Befestigungsschiene 60 mit vorgebohrten Befestigungslöchern 62 und Einsatzschlitzen 64 ausgeführt sein (vgl. Fig. 6 bis 11).

Die Befestigungsnuten 46 mit ihren Zusatznuten 50 können verwendet werden, um beispielsweise ein Rollo oder Seitenwände zu befestigen. Die Nut 50 kann auch benutzt werden, um eine Reduzierung auf andere Werkstoffdicken zu ermöglichen.

Fig. 6 zeigt in perspektivischer Darstellung den Einsatz einer Befestigungsschiene 60 in die Zusatznuten 54 der Befestigungsnut 48.

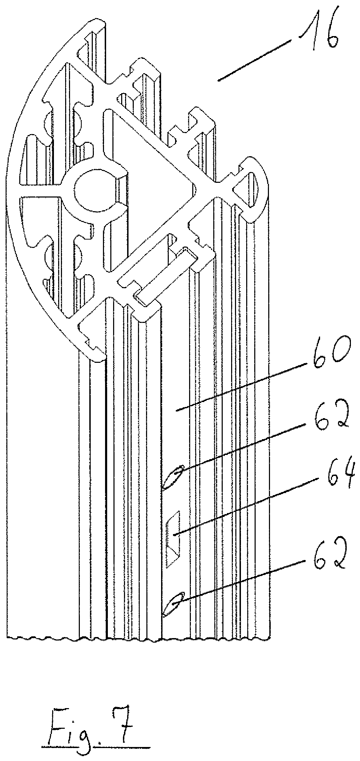

Wie dies weiter aus Fig. 7 ersichtlich ist, sind in dieser Befestigungsschiene 60 vorgebohrte Befestigungslöcher 62 und Einsatzschlitze 64 vorgesehen.

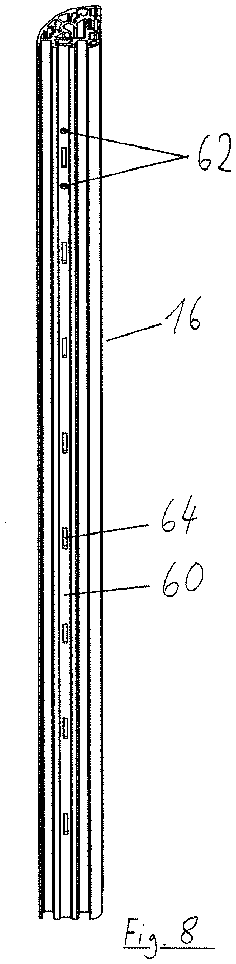

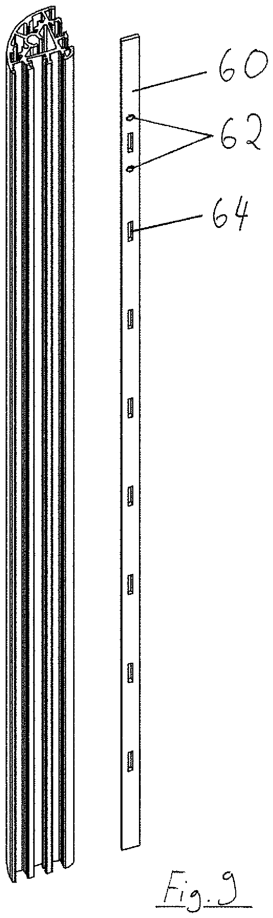

Eine weitere perspektivische Darstellung ist in Fig. 8 und 9 ersichtlich.

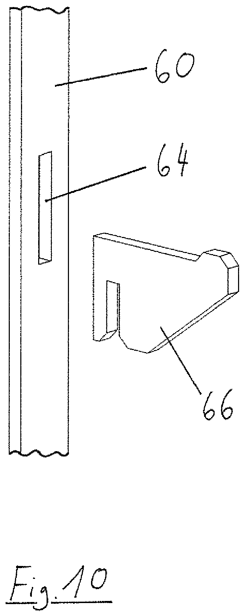

Wie aus Fig. 10 ersichtlich, können in die Schlitze 64 entsprechende Gegenhaken 66 eingesetzt werden. Die Gegenhaken 66 dienen beispielsweise dazu, einen Einsatzboden zu tragen. Die Bohrungen 62 können insbesondere verwendet werden, um beispielsweise ein Anschraubblech 68 zu befestigen. Ein derartiges Anschraubblech 68 kann insbesondere verwendet werden, um beispielsweise eine Schublade 24 oder diverse andere Aufbauten, wie Klappen oder dergleichen zu befestigen. Die Bohrungen 62 können dabei beliebig gewählt werden.

Fig. 12 zeigt das Rahmengestell des Satellit-Zusatzwagens 30, wie er in bereits in Fig. 1 und Fig. 2 ersichtlich ist.

Der Satellit-Zusatzwagen 30 weist dabei einen rahmenartigen Aufbau auf, wobei der rahmenartige Aufbau insbesondere einen umlaufenden Bügel 70 aufweist, der Befestigungslaschen 72 ausbildet.

Die Befestigungslaschen 72 sind U-förmig ausgebildet und auf der Seite des Satellit-Zusatzwagens 30 angeordnet, die im angekoppelten Zustand dem Service- und Reinigungswagen 10 zugewandt ist.

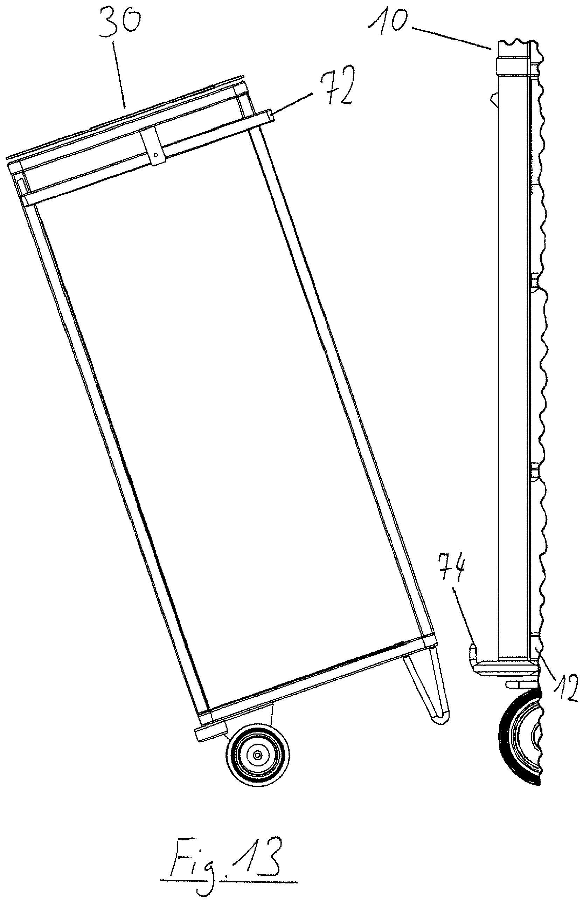

Dies ist auch in Fig. 13 näher dargestellt.

Wie dies weiter aus Fig. 13 ersichtlich ist, weist der Service- und Reinigungswagen 10 im Bereich seines Untergestells 12 einen Einhängbügel 74 auf, an dem der Satellit-Zusatzwagen 30 anhängbar ist.

Der Einhängvorgang verläuft dabei dergestalt, dass im angehängten Zustand der Satellit-Zusatzwagen 30 über den Einhängbügel 74 verfahren und von oben hinein eingehängt wird.

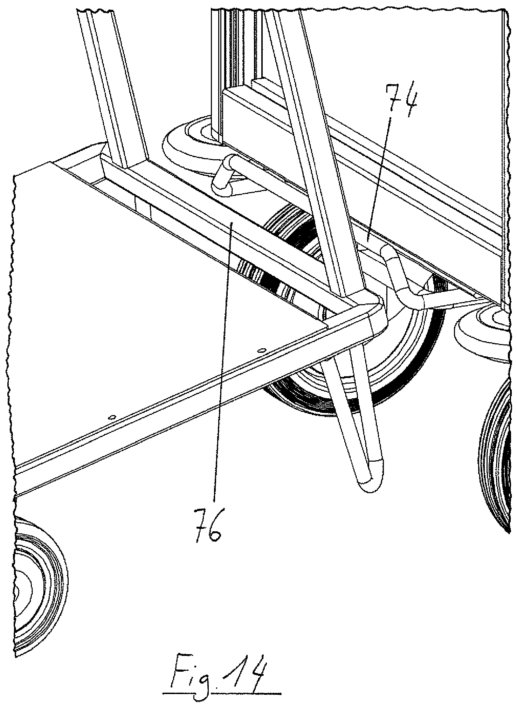

Der Einhängbügel 74 untergreift somit ein entsprechendes Rahmenteil 76 (vgl. Fig. 14) des Satellit-Zusatzwagens 30.

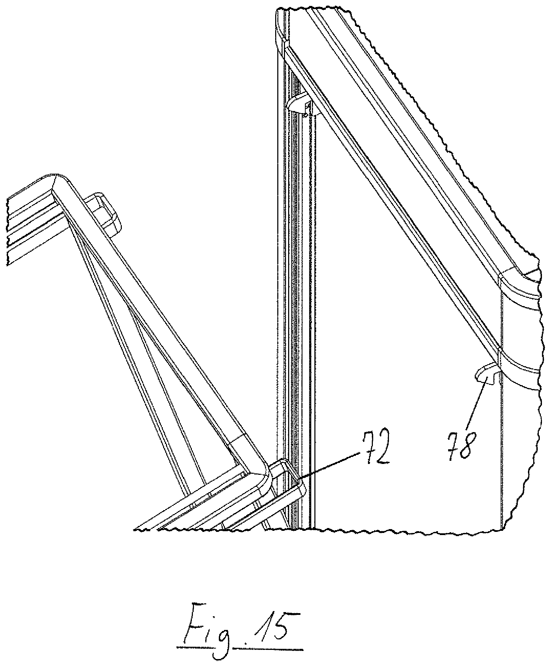

Wie dies weiter aus den Figuren 15 bis 17 ersichtlich ist, wird die Lasche 72 von einem Befestigungshaken 78 beim Einhängvorgang übergriffen.

Der Satellit-Zusatzwagen 30 ist somit im unteren Bereich sowohl untergriffen als auch im oberen Bereich übergriffen, wodurch eine sichere Befestigung und Ankopplung an den Service- und Reinigungswagen 10 ermöglicht ist.

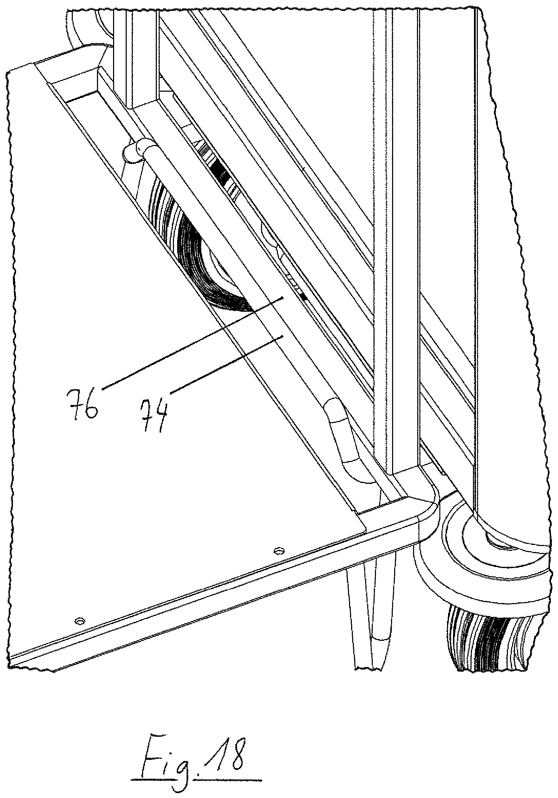

Fig. 18 zeigt die Ankopplung des Satellit-Zusatzwagens 30 an den Service- und Reinigungswagen 10 im unteren Bereich.

Fig. 19 zeigt in perspektivischer Darstellung im Detail den Aufbau der Schublade 24, wie er in Fig. 1 und Fig. 2 ersichtlich ist.

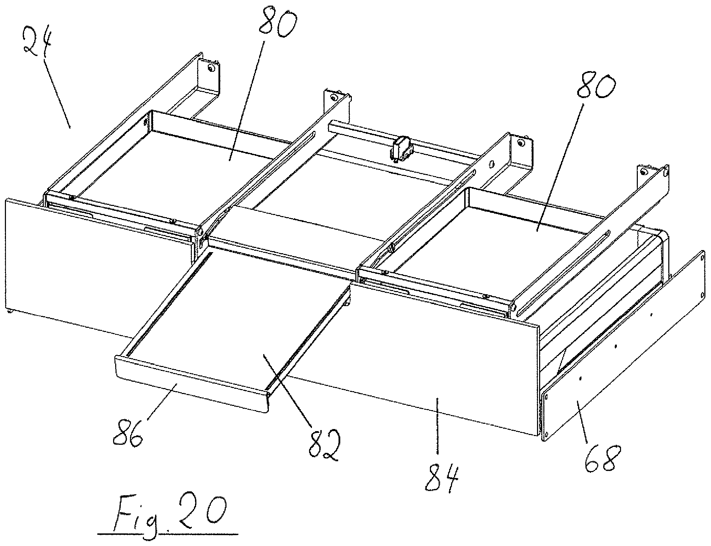

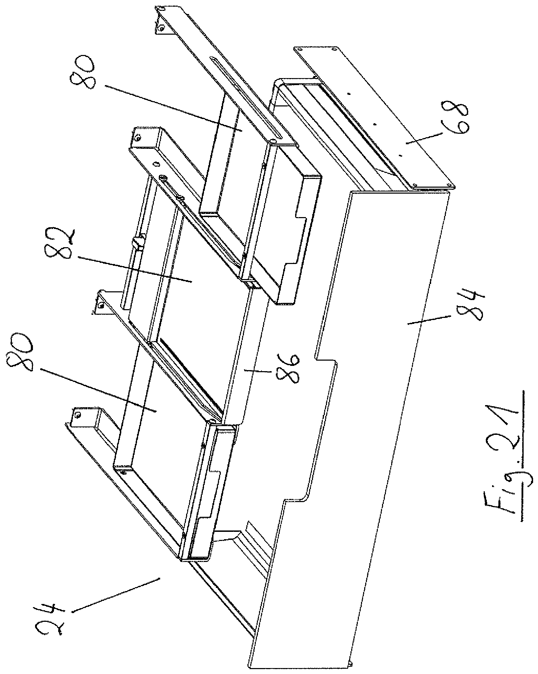

Fig. 20 zeigt dabei weitere Detaildarstellungen, ebenso Fig. 21.

Wie dies aus den Figuren 19 bis 21 ersichtlich ist, sind in der Schublade 24 mehrere gesonderte Ablagefächer 80 vorgesehen.

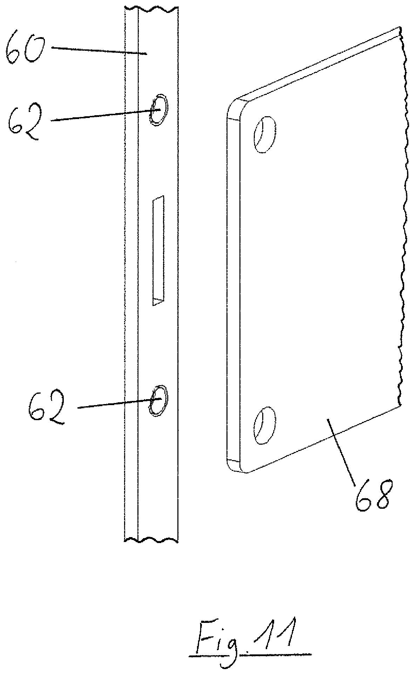

Wie bereits im Zusammenhang mit Fig. 11 beschrieben, kann das Befestigungsblech 68 in den Befestigungsbohrungen 62 befestigt werden.

Die Schublade 24 ist weiter mit einer gesondert ausziehbaren Schreibfläche 82 versehen, wobei die Schreibfläche 82 gemeinsam mit der Frontseite 84 der Schublade 24 eine durchgängige Fläche ausbildet.

Hierzu weist die Schreibfläche 82 ebenfalls eine Stirnfläche 86 auf, die sich in die Außenfläche der Frontseite 84 der Schublade 24 einfügt.

Fig. 20 zeigt die gesondert ausgezogene Schreibfläche 82.

Wie dies weiter auf Fig. 21 ersichtlich ist, kann die Schublade 24 ausgezogen werden, ohne dass die Ablagefächer 80 ausgezogen werden müssen.

Die Ablagefächer 80 können ebenfalls bei geöffneter Schublade 24 gesondert ausgezogen werden.

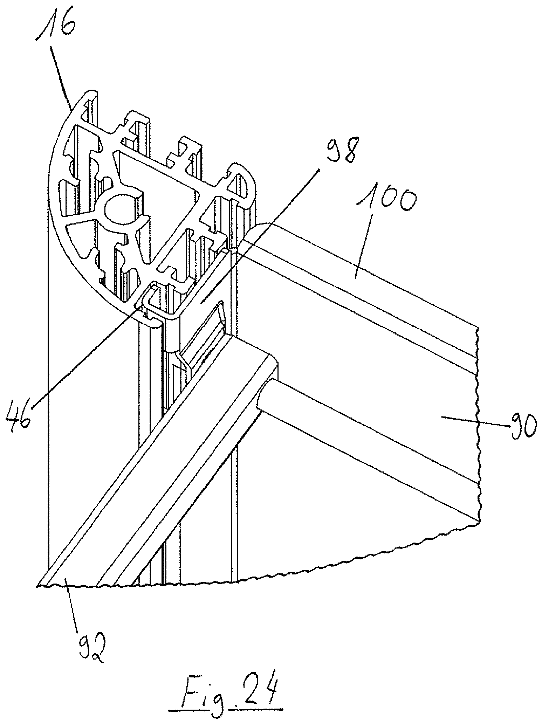

In den Figuren 24 bis 25 ist in perspektivischer Darstellung und in Details gezeigt, wie der Absteller 34 (vgl. Fig. 3 und 4) im Detail ausgebildet ist.

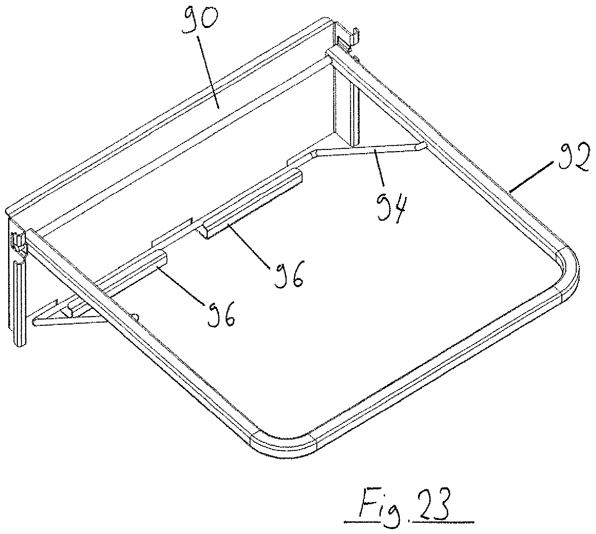

Der Absteller 34 weist dabei einen Befestigungsrahmen 90, eine verschwenkbare Abstellfläche 92 (in Fig. 22 und Fig. 23 nur als Rahmen 92 dargestellt) und einen Fixierungsbügel 94 auf.

Mittels des Fixierungsbügels 94 kann im ausgeklappten Zustand die Abstellfläche 92 gegenüber dem Befestigungsrahmen 90 fixiert werden.

Der Befestigungsrahmen 90 weist hierzu Einstelllaschen 96 auf, in denen der Fixierungsbügel 94 eingeklappt gehalten werden kann, um hierdurch die Abstellfläche 92 im ausgeklappten Zustand halten zu können.

Fig. 23 zeigt eine Draufsicht auf den Absteller 34 im ausgeklappten Zustand.

Wie dies weiter auf Fig. 24 ersichtlich ist, wird der Befestigungsrahmen 90 in die Seitenstreben 16 eingeklipst und mittels eines Federbügels 98 in der Befestigungsnut 46 gehalten.

Darüber hinaus ist weiter eine Auflagelasche 100 vorgesehen, mit der der Befestigungsrahmen 90 in Position gehalten werden kann und beispielsweise auf einer Seitenwand (hier nicht näher dargestellt) aufliegt.

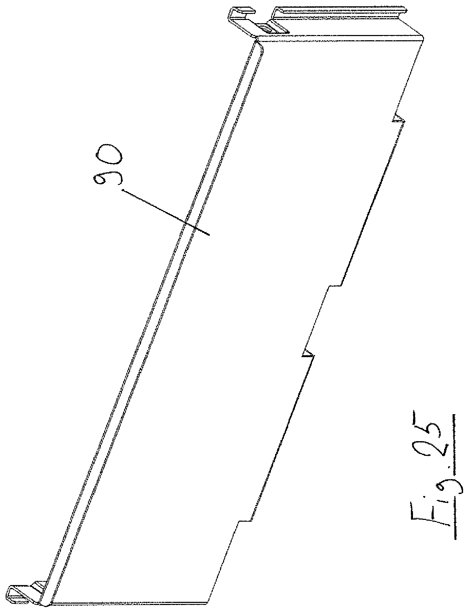

Fig. 25 zeigt den Befestigungsrahmen 90 in perspektivischer Darstellung.

### Bezugszeichenliste

- 10: Service- und Reinigungswagen
- 12: Untergestell
- 14: Rollen
- 16: Seitenstreben
- 18: Aufbau
- 20: Seitenwand
- 22: Seitenwand
- 24: Schublade
- 26: Regalfächer
- 28: Abstellfläche
- 30: Satellit-Zusatzwagen
- 31: Abweisrollen
- 32: Absteller
- 33: Gittereinsatz
- 34: Absteller
- 35: Boden
- 40: Viertelrundseite
- 42: Abrundung
- 44: Funktionalseite
- 46: Befestigungsnut
- 48: Befestigungsnut
- 50: Zusatznut
- 52: Zusatznut
- 54: Zusatznutpaar
- 56: Anschraubaufnahme
- 58: Anschraubbohrung
- 60: Befestigungsschiene
- 62: Befestigungslöcher
- 64: Einsatzschlitze
- 66: Gegenhaken
- 68: Anschraubblech
- 70: Bügel
- 72: Befestigungslaschen
- 74: Einhängbügel
- 76: Rahmenteil
- 78: Befestigungshaken
- 80: Ablagefächer
- 82: Schreibfläche
- 84: Frontseite
- 86: Stirnfläche
- 90: Befestigungsrahmen
- 92: Abstellfläche
- 94: Fixierungsbügel
- 96: Einstelllaschen
- 98: Federbügel
- 100: Auflagelasche

## Patentansprüche

1. Von Hand schiebbarer Service- und Reinigungswagen (10) mit einem Untergestell (12) und mit mehreren am Untergestell (12) montierten Rollen (14), wobei weiter vier Seitenstreben (16) vorgesehen sind, die ein Grundgerüst für einen Aufbau (18) des Service- und Reinigungswagens (10) bilden, und wobei die Seitenstreben (16) aus einem Metallsystemprofil ausgebildet sind,
**dadurch gekennzeichnet, dass**
im montierten Zustand zwischen zwei Metallsystemprofilen ein ausklappbarer Absteller (32, 34) angeordnet ist, wobei der Absteller (32, 34) wenigstens einen in den Metallsystemprofilen befestigungsmittelfrei einklipsbaren Befestigungsrahmen (90), wenigstens eine gegenüber dem Befestigungsrahmen (90) verschwenkbare Abstellfläche (92) und wenigstens einen Fixierungsbügel (94) aufweist, mittels dessen im ausgeklappten Zustand der Abstellfläche (92) die Position der Abstellfläche (92) relativ zum Befestigungsrahmen (90) fixiert ist.

2. Service- und Reinigungswagen (10) nach Anspruch 1, **dadurch gekennzeichnet, dass** das Metallsystemprofil ein Viertelrundprofil mit einer Viertelrundseite (40) ist und zwei weitere Funktionalseiten (44) mit einer oder mehreren Befestigungsnuten (46, 48) aufweist.

3. Service- und Reinigungswagen (10) nach Anspruch 1, **dadurch gekennzeichnet, dass** das Metallsystemprofil ein eckiges Profil, insbesondere ein Rechteckprofil oder ein quadratisches Profil, ist und zwei weitere Funktionalseiten (44) mit einer oder mehreren Befestigungsnuten (46, 48) aufweist.

4. Service- und Reinigungswagen (10) nach Anspruch 2 oder Anspruch 3, **dadurch gekennzeichnet, dass** jede Funktionalseite (44) zwei oder mehrere Befestigungsnuten (46, 48) aufweist.

5. Service- und Reinigungswagen (10) nach einem der Ansprüche 2 bis 4, **dadurch gekennzeichnet, dass** die Befestigungsnuten (46, 48) in ihren seitlichen Begrenzungswänden jeweils wenigstens eine Zusatznut (50, 52) aufweisen, wobei die Zusatznuten (50, 52) einer Befestigungsnut (46, 48) sich jeweils gegenüberliegen.

6. Service- und Reinigungswagen (10) nach Anspruch 2 oder nach einem der Ansprüche 4 und 5, wenn abhängig vom Anspruch 2, **dadurch gekennzeichnet, dass** das Metallsystemprofil im Bereich der Viertelrundseite (40) eine oder mehrere Anschraubaufnahmen (56) aufweist.

7. Service- und Reinigungswagen (10) nach einem der vorhergehenden Ansprüche, **dadurch gekennzeichnet, dass** das Metallsystemprofil eine zentrale Anschraubbohrung (58) aufweist.

8. Service- und Reinigungswagen (10) nach einem der vorhergehenden Ansprüche, **dadurch gekennzeichnet, dass** der Service- und Reinigungswagen (10) im Bereich des Untergestells (12) einen Einhängbügel (74) aufweist, an dem ein Satellit-Zusatzwagen (30) anhängbar ist.

9. Service- und Reinigungswagen (10) nach Anspruch 8, **dadurch gekennzeichnet, dass** oberhalb des Einhängbügels (74) an einer Seitenwand (20) des Service- und Reinigungswagens (10) im Bereich des dem Untergestell (12) abgewandten Endes der Seitenwand (20) wenigstens eine Einrastkralle hervorragt, die im angehängten Zustand des Satellit-Zusatzwagens (30) einen Rahmenbügel des Satellit-Zusatzwagens (30) übergreift.

10. Service- und Reinigungswagen (10) nach einem der vorhergehenden Ansprüche, **dadurch gekennzeichnet, dass** im Aufbau (18) des Service- und Reinigungswagens (10) wenigstens eine Schublade (24) vorgesehen ist, wobei im Inneren der Schublade (24) mehrere gesonderte Ablagefächer (80) und eine Schreibfläche (82) vorgesehen sind, wobei die Schreibfläche (82) gesondert auch im geschlossenen Zustand der Schublade (24) herausziehbar ist.

## Claims

1. Service and cleaning trolley (10) that can be pushed by hand, having an undercarriage (12) and having a plurality of rollers (14) mounted on the undercarriage (12), wherein four side struts (16) that form a basic framework for a structure (18) of the service and cleaning trolley (10) are furthermore provided, and wherein the side struts (16) are formed from a metal system profile,
**characterized in that**,
in the mounted state, a support (32, 34) that can be folded out is arranged between two metal system profiles, wherein the support (32, 34) has at least one fastening frame (90), which can be clipped in the metal system profiles without fastening means, at least one support surface (92), which can be pivoted with respect to the fastening frame (90), and at least one fixing bracket (94), by means of which, in the folded-out state of the support surface (92), the position of the support surface (92) relative to the fastening frame (90) is fixed.

2. Service and cleaning trolley (10) according to Claim 1, **characterized in that** the metal system profile is a quarter-circle profile with a quarter-circle side (40) and has two further functional sides (44) with one or more fastening grooves (46, 48).

3. Service and cleaning trolley (10) according to Claim 1, **characterized in that** the metal system profile is an angular profile, in particular a rectangular profile or a square profile, and has two further functional sides (44) with one or more fastening grooves (46, 48).

4. Service and cleaning trolley (10) according to Claim 2 or Claim 3, **characterized in that** each functional side (44) has two or more fastening grooves (46, 48).

5. Service and cleaning trolley (10) according to one of Claims 2 to 4, **characterized in that** the fastening grooves (46, 48) respectively have at least one additional groove (50, 52) in their lateral boundary walls, wherein each additional groove (50, 52) is situated opposite a fastening groove (46, 48).

6. Service and cleaning trolley (10) according to Claim 2 or according to either of Claims 4 and 5, where dependent on Claim 2, **characterized in that** the metal system profile has one or more screw-connection receptacles (56) in the region of the quarter-circle side (40).

7. Service and cleaning trolley (10) according to one of the preceding claims, **characterized in that** the metal system profile has a central screw-connection bore (58).

8. Service and cleaning trolley (10) according to one of the preceding claims, **characterized in that** the service and cleaning trolley (10) has a fitting bracket (74), to which a satellite additional trolley (30) can be coupled as a trailer, in the region of the undercarriage (12).

9. Service and cleaning trolley (10) according to Claim 8, **characterized in that** at least one latch-in claw, which engages over a frame bracket of the satellite additional trolley (30) when the satellite additional trolley (30) is in the state in which it is coupled as a trailer, protrudes above the fitting bracket (74) on a side wall (20) of the service and cleaning trolley (10) in the region of that end of the side wall (20) which faces away from the undercarriage (12).

10. Service and cleaning trolley (10) according to one of the preceding claims, **characterized in that** at least one drawer (24) is provided in the structure (18) of the service and cleaning trolley (10), wherein a plurality of separate storage compartments (80) and a writing surface (82) are provided in the interior of the drawer (24), wherein the writing surface (82) can be pulled out separately even in the closed state of the drawer (24).

## Revendications

1. Chariot de service et de nettoyage (10) pouvant être poussé à la main, comportant un châssis inférieur (12) et plusieurs roulettes (14) montées sur le châssis inférieur (12), quatre montants latéraux (16) étant en outre prévus, qui forment une structure de base pour un corps (18) du chariot de service et de nettoyage (10), et les montants latéraux (16) étant formés à partir d'un profilé de système métallique,
**caractérisé en ce que**
à l'état monté, un support rabattable (32, 34) est agencé entre deux profilés de système métalliques, le support (32, 34) comprenant au moins un cadre de fixation (90) pouvant être clipsé sans moyen de fixation dans les profilés de système métalliques, au moins une surface de support (92) pouvant pivoter par rapport au cadre de fixation (90) et au moins un étrier de fixation (94), au moyen duquel, à l'état rabattu de la surface de support (92), la position de la surface de support (92) par rapport au cadre de fixation (90) est fixée.

2. Chariot de service et de nettoyage (10) selon la revendication 1, **caractérisé en ce que** le profilé de système métallique est un profilé en quart de rond comportant un côté en quart de rond (40) et comprend deux autres côtés fonctionnels (44) comportant une ou plusieurs rainures de fixation (46, 48).

3. Chariot de service et de nettoyage (10) selon la revendication 1, **caractérisé en ce que** le profilé de système métallique est un profilé angulaire, notamment un profilé rectangulaire ou un profilé carré, et comprend deux autres côtés fonctionnels (44) comportant une ou plusieurs rainures de fixation (46, 48).

4. Chariot de service et de nettoyage (10) selon la revendication 2 ou la revendication 3, **caractérisé en ce que** chaque côté fonctionnel (44) comprend deux rainures de fixation (46, 48) ou plus.

5. Chariot de service et de nettoyage (10) selon l'une quelconque des revendications 2 à 4, **caractérisé en ce que** les rainures de fixation (46, 48) comprennent chacune au moins une rainure supplémentaire (50, 52) dans leurs parois de délimitation latérales, les rainures supplémentaires (50, 52) d'une rainure de fixation (46, 48) se trouvant chacune en face les unes des autres.

6. Chariot de service et de nettoyage (10) selon la revendication 2 ou selon l'une quelconque des revendications 4 et 5, lorsqu'elles dépendent de la revendication 2, **caractérisé en ce que** le profilé de système métallique comprend un ou plusieurs logements de vissage (56) dans la zone du côté en quart de rond (40) .

7. Chariot de service et de nettoyage (10) selon l'une quelconque des revendications précédentes, **caractérisé en ce que** le profilé de système métallique comprend un alésage de vissage central (58).

8. Chariot de service et de nettoyage (10) selon l'une quelconque des revendications précédentes, **caractérisé en ce que** le chariot de service et de nettoyage (10) comprend, dans la zone du châssis inférieur (12), un étrier d'accrochage (74) auquel un chariot satellite supplémentaire (30) peut être accroché.

9. Chariot de service et de nettoyage (10) selon la revendication 8, **caractérisé en ce qu'**au moins une griffe d'encliquetage fait saillie au-dessus de l'étrier d'accrochage (74) sur une paroi latérale (20) du chariot de service et de nettoyage (10) dans la zone de l'extrémité de la paroi latérale (20) détournée du châssis inférieur (12), qui s'engage sur un étrier de cadre du chariot satellite supplémentaire (30) à l'état accroché du chariot satellite supplémentaire (30).

10. Chariot de service et de nettoyage (10) selon l'une quelconque des revendications précédentes, **caractérisé en ce qu'au** moins un tiroir (24) est prévu dans le corps (18) du chariot de service et de nettoyage (10), plusieurs compartiments de rangement séparés (80) et une surface d'écriture (82) étant prévus à l'intérieur du tiroir (24), la surface d'écriture (82) pouvant être extraite séparément même à l'état fermé du tiroir (24).
